**Europäisches Patentamt**

**European Patent Office**

**Office européen des brevets**

(19)

(11)     **EP 1 376 920 B1**

(12)     **EUROPÄISCHE PATENTSCHRIFT**

(45) Veröffentlichungstag und Bekanntmachung des Hinweises auf die Patenterteilung:
**26.10.2005   Patentblatt 2005/43**

(51) Int Cl.$^7$: **H04L 1/06**

(21) Anmeldenummer: **02014204.8**

(22) Anmeldetag: **27.06.2002**

(54) **Anordnung und verfahren zur Datenübertragung in einem mehrfacheingabe mehrfachausgabe Funkkommunikationssystem**

Apparatus and method for data transmission in a multi-input multi-output radio communication system

Dispositif et procédé de transmission de données dans un système de télécommunication sans fil à multiples entrées et sorties

(84) Benannte Vertragsstaaten:
**AT BE CH CY DE DK ES FI FR GB GR IE IT LI LU MC NL PT SE TR**

(43) Veröffentlichungstag der Anmeldung:
**02.01.2004   Patentblatt 2004/01**

(73) Patentinhaber: **SIEMENS AKTIENGESELLSCHAFT 80333 München (DE)**

(72) Erfinder:
• **Frey, Thomas, Dr.
89081 Ulm (DE)**

• **Kiessling, Mario
89075 Ulm (DE)**
• **Reinhardt, Markus, Dr.
89231 Neu-Ulm (DE)**
• **Viering, Ingo
89075 Ulm (DE)**

(56) Entgegenhaltungen:
**EP-A- 1 065 804          EP-A- 1 185 001
EP-A- 1 195 937          US-B1- 6 377 631**

**Beschreibung**

Die Erfindung betrifft eine Anordnung und ein Verfahren zur Datenübertragung in einem Funkkommunikationssystem, bei dem sende- und empfangsseitig aus mehreren Antennensystemen bestehende Antennenanordnungen verwendet werden.

Bei Funkkommunikationssystemen bzw. Mobilfunksystemen, werden zur Kapazitätssteigerung der Datenübertragung sowohl sendeseitig als auch empfangsseitig jeweils aus mehreren Antennensystemen bestehende Antennenanordnungen verwendet.

Derartige Funkkommunikationssysteme werden als sogenannte "MIMO"-Funkkommunikationssysteme ("Multiple-Input-Multiple-Output", MIMO) bezeichnet. Mit Hilfe spezieller Signalverarbeitungs-Algorithmen sind von den Antennenanordnungen räumliche Übertragungskanalinformationen ableitbar, mit deren Hilfe eine Erhöhung beim Datendurchsatz bzw. eine Verbesserung der Übertragungsqualität erreicht wird.

Derartige MIMO-Funkkommunikationssysteme sollen bevorzugt als "Indoor"-Funkkommunikationssysteme eingesetzt werden, da dort die zur Funkübertragung verwendeten Übertragungskanäle aufgrund vieler Streuzentren unkorreliert zueinander sind.

Hingegen würden korrelierte Funkkanäle zur Übertragung von mehreren unabhängigen Datenströmen bei den oben angeführten Signalverarbeitungs-Algorithmen im allgemeinen zu nichtinvertierbaren "Kanalmatrizen" führen, was letztendlich zu empfangsseitigen Störungen führen würde.

Aus US 6,377,631 B1 ist ein System mit einer "Space-Time-Signal"-Verarbeitung bekannt, das eine geringe Komplexität aufweist. Dabei gelangen gemäß FIG 22 zu sendende Daten an einen "Encoding and Interleaving"-Block, in dem die Daten in seriell/parallel gewandelt, kodiert und verschachtelt werden. Nachfolgend gelangen parallele Datenfolgen über einen Block "TX Space-Frequency Pre-processor" zur Funkübertragung. Empfängerseitig werden parallel zueinander übertragene Datenfolgen durch einen Block "Receiver Space-Frequency Processor" empfangen und werden einem Block "Decoder and Deinterleaving" zugeführt, der aus den empfangenen Datenfolgen eine serielle Datenfolge bildet.

Aufgabe der vorliegenden Erfindung ist es, bei einem MIMO-Funkkommunikationssystem den Datendurchsatz bzw. die Übertragungsqualität unabhängig von der Korrelation der zur Übertragung verwendeten Funkkanäle zu optimieren.

Die Aufgabe der Erfindung wird bezüglich einer Anordnung durch die Merkmale des Anspruchs 1 gelöst. Vorteilhafte Weiterbildungen sind in den Unteransprüchen angegeben.

Die erfindungsgemäße Datenübertragung wird mit Hilfe eines sendeseitig volladaptiven MIMO-Funkkommunikationssystem realisiert. Diese ist charakterisiert durch eine adaptiv wählbare Subkanalanzahl, wobei die einzelnen Subkanäle subkanalspezifische adaptive Modulationsverfahren aufweisen, sowie durch eine adaptive Leistungszuordnung zu den den Subkanälen zugeordneten Datensymbolen.

Bei der erfindungsgemäßen Datenübertragung werden die Subkanäle mit Hilfe eines Matrixfilters einzelnen Antennensystemen einer Antennenanordnung zugeordnet.

Mit Hilfe der erfindungsgemäßen Datenübertragung ist eine Diagonalisierung einer MIMO-Kanalmatrix in unabhängige Subkanäle realisierbar, wobei sogenannte "Short-Term-Channel-State-Informationen verwendet werden - im folgenden als Kurzzeitinformationen ST-CSI bezeichnet.

Erfindungsgemäß werden gewonnene Übertragungskanal-Informationen CSI (Channel-State-Information) zur Gestaltung der sendeseitigen Adaptivität verwendet, wobei hier sowohl der kurzzeitige Zustand eines (Funk-) Übertragungskanals, beschrieben durch die sogenannten Kurzzeitinformationen ST-CSI, als auch langzeitige Eigenschaften des (Funk-) Übertragungskanals, beschrieben durch sogenannte "Long-Term-Channel-State-Informationen" berücksichtigt werden.

Die "Long-Term-Channel-State-Informationen" werden im folgenden als Langzeitinformationen LT-CSI bezeichnet.

Bei einem TDD-Mobilfunksystem beispielsweise besteht zwischen Empfangsrichtung und Senderichtung kein Frequenzunterschied. Unter der Annahme einer geringen Mobilität werden dann die gegenwärtigen Übertragungskanaleigenschaften in beiden Übertragungsrichtungen einander im wesentlichen gleichen. Damit sind beispielsweise die in Empfangsrichtung mit Hilfe einer Trainingssequenz geschätzten Übertragungskanaleigenschaften auch für eine Signalverarbeitung in Senderichtung verwendbar.

Bei einem FDD-Mobilfunksystem werden Eigenschaften des Übertragungskanals über die Langzeitinformationen LT-CSI bestimmt, da hier Kurzzeitinformationen ST-CSI (wenn überhaupt) nur schwer bestimmbar sind. Diese Langzeitinformationen LT-CSI werden beispielsweise wie folgt bestimmt:

- Schätzung einer Korrelationsmatzrix in Empfangsrichtung und Frequenztransformation auf eine gewünschte Sendefrequenz in Senderichtung, oder
- empfangsseitige Bestimmung der Korrelationsmatrix und Übertragung zur Sendeseite mit Hilfe einer Feedback-

**EP 1 376 920 B1**

Verbindung, wobei sendeseitig die Korrelationsmatrix für eine zu erfolgende Signalverarbeitung verwendet wird.

Durch das erfindungsgemäße sendeseitig angeordnete Matrix-Filter und durch das adaptive Modulationsverfahren bei den jeweiligen Subkanälen werden beim MIMO-Funkkommunikationssystem hohe Datendurchsätze bzw. hohe Übertragungsqualitäten sowohl für eine "Indoor"-Anwendung (Funkversorgung in Gebäuden) als für eine "Outdoor"-Anwendung (freies Funkfeld) erreicht - d.h. unabhängig von der Korrelation der zur Übertragung verwendeten Funkkanäle.

Bei einem TDD-Funkkommunikationssystem (UTRA TDD) stehen empfangsseitig geschätzte Kurzzeitinformationen ST-CSI zur Verfügung, während bei einem FDD-Funkkommunikationssystem (UTRA FDD) bedingt durch verschiedene Übertragungskanal-Charakteristiken im Sendezweig bzw. im Empfangszweig geschätzte Langzeitinformationen LT-CSI empfangsseitig zur Verfügung stehen - die beispielsweise mit Hilfe einer Feedback-Verbindung von einem anderen Teilnehmer übertragen werden.

Das erfindungsgemäße MIMO-Funkkommunikationssystem ist zwischen zwei Extrempositionen einstellbar. So ist einerseits ein reines Beamforming mittels adaptiver Antennenanordnung für Anwendungen mit streng korrelierten Übertragungskanälen einstellbar oder andererseits ist eine auf die Antennenanordnung bezogene spaltenweise Daten- bzw. Symbolaufteilung für Anwendungen mit gering korrelierten Übertragungskanälen bzw. für Übertragungen mehrerer unabhängiger Datenströme realisierbar.

Im Folgenden wird ein Ausführungsbeispiel der Erfindung anhand einer Zeichnung näher erläutert. Dabei zeigen:

FIG 1    ein Blockschaltbild einer Anordnung zur Datenübertragung gemäß dem Stand der Technik,
FIG 2    ein Blockschaltbild einer Anordnung zur Datenübertragung gemäß der Erfindung,
FIG 3    ein Bockschaltbild eines in FIG 2 dargestellten erfindungsgemäßen Matrix-Filters,
FIG 4    ein Blockschaltbild einer erfindungsgemäßen Anordnung zur Datenübertragung mit einer sendeseitigen Optimierung für einen "Minimum-Mean-Squared-Error(MMSE)-Empfänger,
FIG 5    ein Bockschaltbild von jeweils in FIG 4 dargestellten sendeseitigen bzw. empfangsseitigen Matrix-Filtern,
FIG 6    ein Blockschaltbild einer erfindungsgemäßen Anordnung zur Datenübertragung mit einer sendeseitigen Optimierung für einen "Maximum-Likelihood(ML)"-Empfänger,
FIG 7    ein Blockschaltbild für eine erfindungsgemäße Anordnung zur Datenübertragung mit diagonalisierten Übertragungskanälen und adaptiver Modulation auf den Subkanälen,
FIG 8    ein sendeseitiges Blockschaltbild zu FIG 7, und
FIG 9    eine erfindungsgemäße Anordnung zur Datenübertragung mit diagonalisierten Übertragungskanälen, adaptiver Modulation und adaptiver Leistungszuordnung.

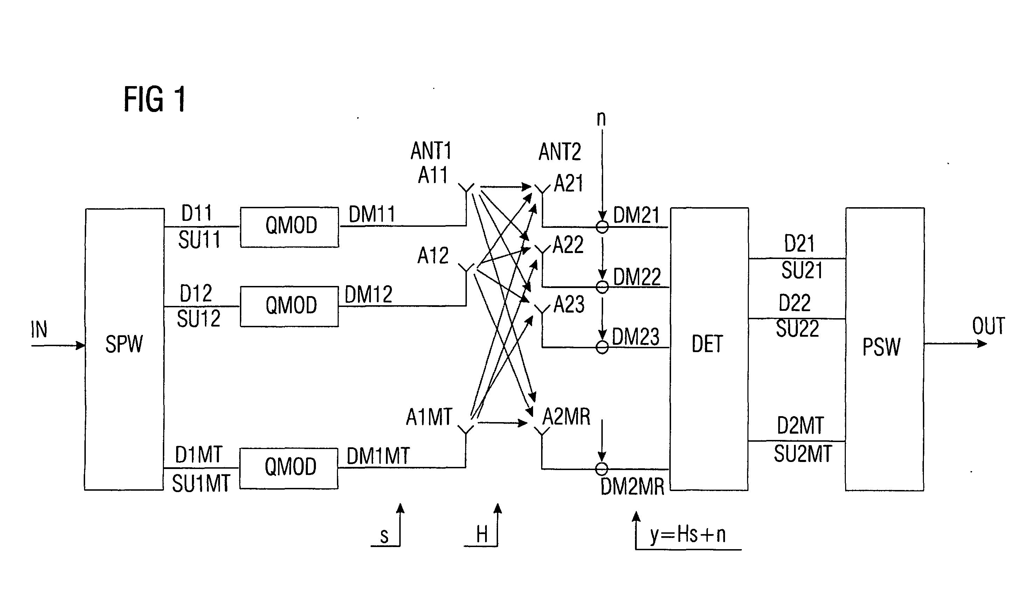

FIG 1 zeigt ein Blockschaltbild einer Anordnung zur Datenübertragung gemäß dem Stand der Technik.

Ein digitales Eingangssignal IN, das seriell aufeinanderfolgende Bits aufweist, gelangt sendeseitig an einen Seriell/Parallel-Wandler SPW, mit dessen Hilfe das Eingangssignal IN in insgesamt MT Datenfolgen D11, D12, ..., D1MT für MT sendeseitige Subkanäle SU11, SU12, ..., SU1MT aufgeteilt wird. Jeder einzelne der MT sendeseitigen Subkanäle SU11 bis SU1MT weist zur Modulation der einzelnen Datenfolgen D11 bis D1MT jeweils einen Modulator QMOD auf, wobei die Datenfolgen D11 bis D1MT mit Hilfe eines identischen Modulationsverfahrens moduliert werden.

Modulierte Datenfolgen DM11, DM12, ..., DM1MT gelangen im wesentlichen zeitgleich zur Abstrahlung an eine sendeseitige Antenneneinrichtung ANT1, die insgesamt MT einzelne Antennensysteme A11, A12, ..., A1MT aufweist. Mit Hilfe einer empfangsseitigen Antenneneinrichtung ANT2, die insgesamt MR einzelne Antennensysteme A21, A22, ..., A2MR aufweist, werden MR Datenfolgen DM21, DM22, ..., DM2MR empfangen. Diese weisen jeweils einen Rauschanteil auf, der durch einen Rauschvektor n hier dargestellt ist.

Die MR Datenfolgen DM21 bis DM2MR gelangen an einen linearen bzw. nichtlinearen Detektor DET, der daraus MT Datenfolgen D21, D22, ...,D2MT für MT empfangsseitige Subkanäle SU21, SU22, ..., SU2MT bildet. Die Datenfolgen D21 bis D2MT gelangen an einen Parallel/Seriell-Wandler PSW, der ein Ausgangssignal OUT mit seriell aufeinanderfolgenden Bits bildet.

Die Eigenschaften der Übertragungskanäle sind in einer Matrix H zusammengefasst. Das über die sendeseitige Antennenanordnung ANT1 abgestrahlte Signal ist in einem Vektor s zusammengefasst. Vor dem empfangsseitigen Detektor DET ergibt sich als empfangenes Signal ein Vektor $y = Hs + n$.

Ein derartiges Funkkommunikationssystem kann als sogenanntes "Blind-MIMO"-Funkkommunikationssystem bezeichnet werden und ist charakterisiert durch:

-    eine geringe sendeseitige Komplexität,
-    eine Übertragungskapazität bzw. eine Bitfehlerrate BER, die von der Korrelation der zur Übertragung verwendeten Kanäle stark abhängig ist,

3

- eine konstante gleiche Anzahl von sendeseitigen und empfangsseitigen Subkanälen,
- eine konstante Datenübertragungsrate, und
- eine konstante Modulation auf den Subkanälen.

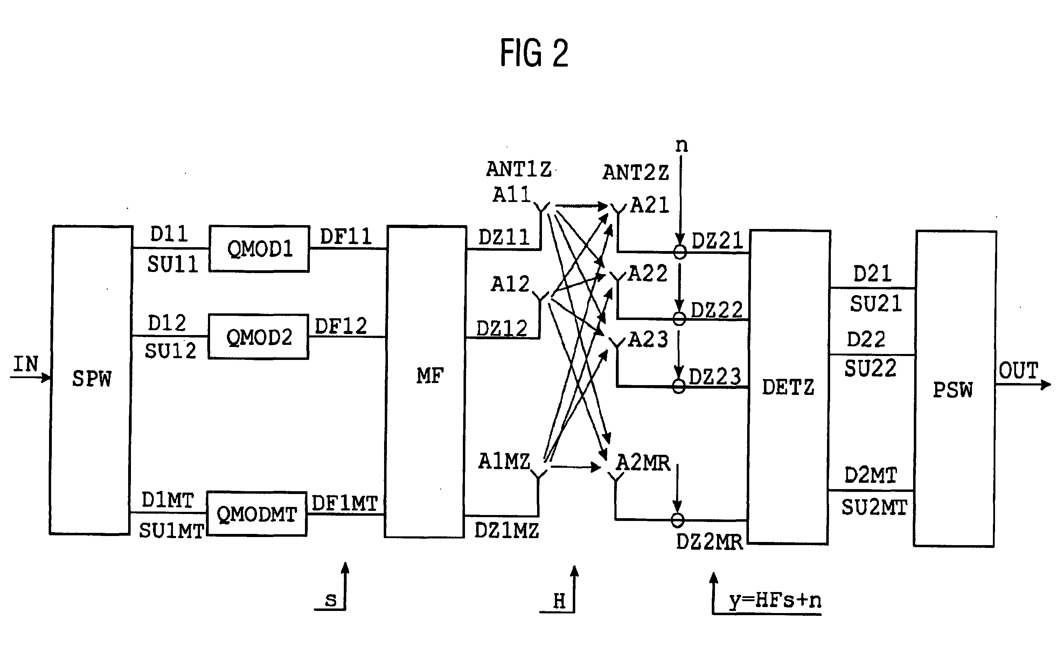

FIG 2 zeigt ein Blockschaltbild einer Anordnung zur Datenübertragung gemäß der Erfindung.

Bei dieser und den nachfolgenden Betrachtungen wird die Matrix H in Empfangsrichtung zu jedem Zeitpunkt als genau bekannt angesehen (perfekte Kanalschätzung). In einem realen Funkkommunikationssystem wird sie beispielsweise in Empfangsrichtung mit Hilfe von übertragenen vorbekannten Trainingssequenzen bestimmt.

Bei einem TDD-Funkkommunikationssystem mit geringer Mobilität wird die Matrix H für die Senderichtung mit Hilfe einer auf der Empfangsrichtung basierenden Schätzung ermittelt, während bei einem FDD-Funkkommunikationssystem die Langzeitinformationen bzw. die Korrelationseigenschaften (Matrix H) mit Hilfe einer Frequenztransformation oder mit Hilfe einer Feedback-Verbindung ermittelt werden.

Verglichen mit FIG 1 wird das Eingangssignal IN wieder mit Hilfe eines Seriell/Parallel-Wandlers SPW auf insgesamt MT Subkanäle SU11 bis SU1MT als Datenfolgen D11 bis D1MT aufgeteilt. Jedoch weist jetzt jeder einzelne sendeseitige Subkanal SU11 bis SU1MT jeweils einen subkanalspezifischen Modulator QMOD1, ..., QMODMT mit einem subkanalspezifischen Modulationsverfahren auf. Mit deren Hilfe werden modulierte Datenfolgen DF11, DF12, ..., DF1MT gebildet, die an ein lineares Matrix-Filter MF gelangen. Mit Hilfe des Matrix-Filters MF werden insgesamt MZ Datenfolgen DZ11, DZ12, ..., DZ1MZ für insgesamt MZ sendeseitig angeordnete Antennensysteme A11, ..., A1MZ einer Antenneneinrichtung ANT1Z gebildet und übertragen.

Mit Hilfe des erfindungsgemäßen Matrix-Filters MF werden die Datenfolgen DZ11 bis DZ1MZ derart gebildet, dass mit Hilfe der sendeseitigen Antennenanordnung ANT1Z für jeden Subkanal SU11 bis SU1MT ein adaptives "Beamforming" realisiert wird. Dieses Beamforming ist an den jeweils verwendeten Übertragungskanaleigenschaften optimal angepasst. Die in den Subkanälen SU11 bis SU1MT verwendeten spezifischen Modulationsverfahren QMOD1 bis QMODMT sind ebenfalls an die Übertragungskanaleigenschaften optimiert angepasst bzw. adaptiert.

Bezeichnend ist bei diesem Beispiel, dass sich die sendeseitige Anzahl MT der Subkanäle SU11 bis SU1MT sich von der Anzahl MZ der sendeseitigen Antennensysteme A1 bis A1MZ unterscheidet - abweichend von FIG 1. In einem Grenzfall ist jedoch die sendeseitige Anzahl MT der Subkanäle SU11 bis SU1MT gleich der Anzahl MZ der sendeseitigen Antennensysteme A11 bis A1MZ wählbar.

Die Anzahl MT der sendeseitigen Subkanäle SU11 bis SU1MT und die Anzahl MT von empfangsseitigen Subkanälen SU21 bis SU2MT ist jeweils gleich und adaptiv an die Übertragungskanaleigenschaften anpassbar.

Empfangsseitig ist eine Antennenanordnung ANT2Z angeordnet, über deren insgesamt MR Antennensysteme A21, A22, ..., A2MR jeweils Datenfolgen DZ21, DZ22, ..., DZ2MR empfangen und gemeinsam einem linearen bzw. nichtlinearen Detektor DETZ zugeführt werden. Der empfangsseitige Detektor DETZ bildet wiederum für die empfangsseitigen MT Subkanäle SU21, ..., SU2MT zugehörige Datenfolgen D21, ..., D2MT, die an einen Parallel/Seriell-Wandler PSW zur Bildung des Ausgangssignals OUT gelangen.

Für den Vektor des empfangenen Signals y gilt: y = HFs + n, wobei eine Matrix F Eigenschaften des Matrix-Filters MF beschreibt.

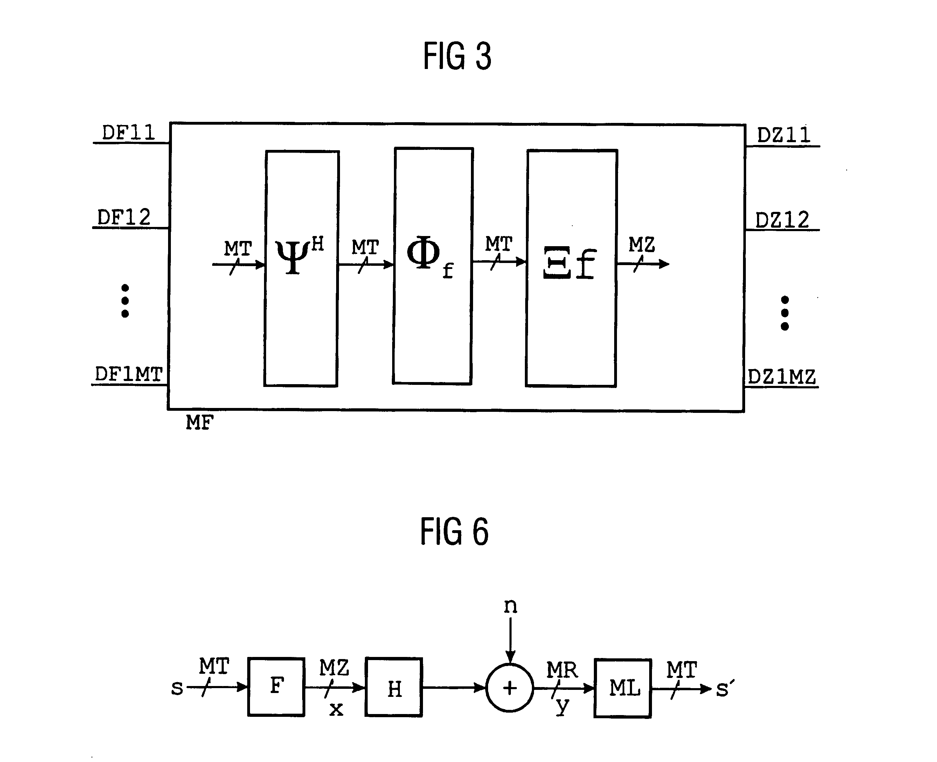

FIG 3 zeigt ein Bockschaltbild eines in FIG 2 dargestellten erfindungsgemäßen Matrix-Filters MF, das drei seriell aufeinanderfolgende Funktionsblöcke aufweist.

Ein erster Funktionsblock $\Psi^H$ stellt eine orthogonale MTxMT-Matrix dar, mit deren Hilfe einzelne Symbole des Eingangssignals anhand verschiedener Übertragungskriterien den einzelnen Übertragungskanälen zugeordnet werden. Ein derartiges Übertragungskriterium wäre beispielsweise eine geforderte gleiche Bitfehlerrate auf allen Subkanälen. Der erste Funktionsblock $\Psi^H$ ist beispielsweise als DFT-Matrix ausgebildet.

Ein zweiter Funktionsblock $\Phi_f$ stellt eine diagonale MTxMT-Matrix dar, mit deren Hilfe jedem einzelnen der Übertragungskanäle eine Leistung zuordenbar ist.

Ein dritter Funktionsblock $\Xi_f$ stellt eine frei wählbare MTxMZ-Matrix dar, mit deren Hilfe die Symbole der Subkanäle den einzelnen Antennensystemen der Antennenanordnung zugeordnet werden.

Zur Gestaltung der Adaptivität des sendeseitigen Matrix-Filters MF, der Anzahl der Subkanäle und der jeweiligen Modulation im Subkanal werden empfangsseitig gewonnene Übertragungskanal-Informationen CSI verwendet.

Beim TDD-Funkkommunikationssystem, bei dem eine geringe Mobilität der Teilnehmer vorausgesetzt wird, sind zur Steuerung der Adaptivität Kurzzeitinformationen ST-CSI verwendbar, während bei einem FDD-Funk-kommunikationssystem genau und zuverlässig bestimmbare Langzeitinformationen LT-CSI verwendbar sind.

Erfindungsgemäß sind beim TDD-Funkkommunikationssystem zusätzlich zu den Kurzzeitinformationen ST-CSI auch Langzeitinformationen LT-CSI bzw. Kombinationen daraus zur Minimierung der Bitfehlerrate bzw. zur Erhöhung der Übertragungskapazität verwendbar.

Für Kurzzeitinformationen ST-CSI des Übertragungskanals gilt mit einer Rauschkovarianzmatrix $R_{nn}$ (Colored-Noise-Kovarianzmatrix), mit einer Matrix H (gegenwärtige MIMO-Kanalmatrix), mit einer Matrix $V_{ST}$ (Kurzzeit-Eigenvektoren) und mit einer Diagonalmatrix $\Lambda_{ST}$ (mit Kurzzeit-Eigenwerten auf der Diagonalen):

**EP 1 376 920 B1**

$$H^H R_{nn}^{-1} H = V_{ST}\Lambda_{ST}V_{ST}^H$$

Langzeitinformationen LT-CSI des Übertragungskanals können beispielsweise mit einer Matrix $V_{LT}$ (als Matrix von Langzeit-Eigenvektoren) und mit einer Diagonalmatrix $\Lambda_{LT}$ (mit Langzeit-Eigenwerten auf der Diagonalen) wie folgt beschrieben werden:

$$E[H^H R_{nn}^{-1} H] = V_{LT}\Lambda_{LT}V_{LT}^H$$

Dabei beschreibt E[.] einen Erwartungswert über einen schnellen Kanalschwund (Fast-Fading) und ist nur von einer Sendekorrelationsmatrix abhängig.

Für Langzeitinformationen LT-CSI kann auch folgender Erwartungswert E gewonnen werden, der nur von einer empfangsseitigen Korrelationsmatrix abhängt:

$$E[HR_{nn}^{-1}H^H]$$

Alternativ kann für Langzeitinformationen LT-CSI auch ein Erwartungswert E der Kurzzeiteigenwerte bestimmt werden:

$$E[\Lambda_{ST}]$$

Oder es wird für Langzeitinformationen LT-CSI von Übertragungskanaleigenschaften ein Erwartungswert gewonnen, der sowohl Informationen über die sendeseitige als auch über die empfangsseitige Korrelationsmatrix enthält:

$$E[vec(H)\cdot vec(H)^H]$$

Im folgenden gilt zur Vereinfachung, dass die Matrix V definiert ist als Matrix $V_{ST}$ oder als Matrix $V_{LT}$, abhängig davon, ob Kurzzeitinformationen ST-CSI oder Langzeitinformationen LT-CSI zur Verfügung stehen. Entsprechendes gilt für $\Lambda$.

Das sendeseitige Matrix-Filter MF ist auf verschiedene Empfängertypen optimierbar, wie beispielsweise auf einen

- <u>M</u>inimum-<u>M</u>ean-<u>S</u>quared-<u>E</u>rror-Empfänger (MMSE), oder
- <u>S</u>uccessive-<u>I</u>nterference-<u>C</u>ancellation Empfänger (SIC), oder
- <u>M</u>aximum-<u>L</u>ikelihood-Empfänger (ML).

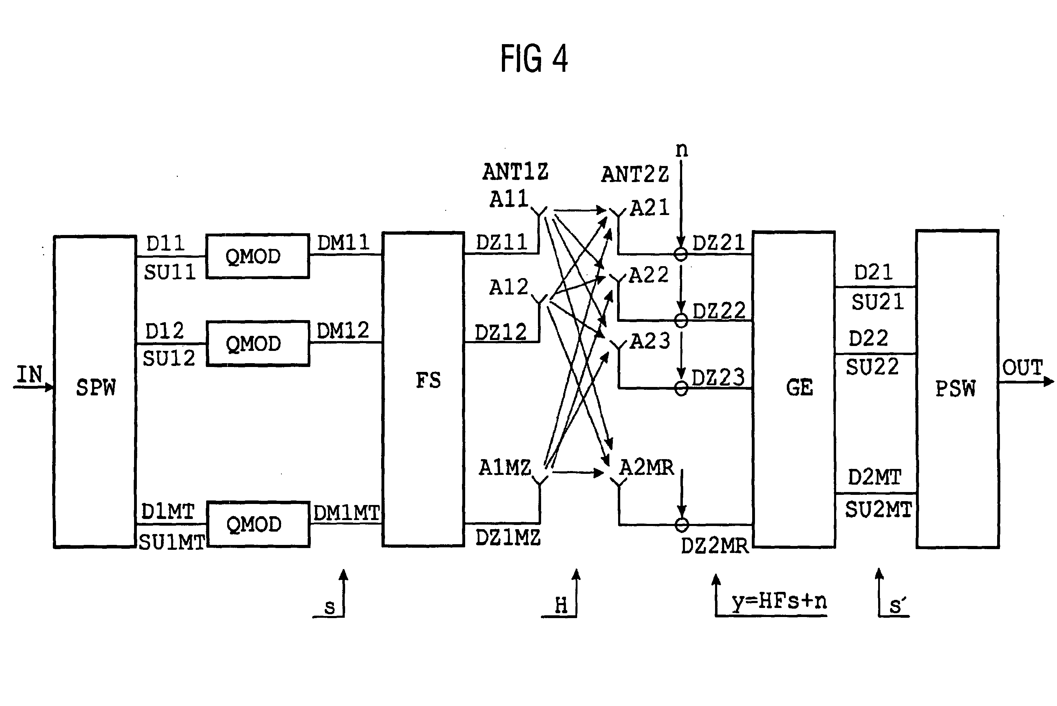

FIG 4 zeigt ein Blockschaltbild einer erfindungsgemäßen Anordnung zur Datenübertragung mit einer sendeseitigen Optimierung für einen MMSE-Empfänger.

Verglichen mit FIG 2 werden bei den MT Subkanälen SU11 bis SU1MT die Datenfolgen D11 bis D1MT gleichartig moduliert, beispielsweise mit Hilfe einer Quadraturmodulation QMOD. Dadurch werden sendeseitig modulierte Datenfolgen DM11 bis DM1MT erzeugt, die ihrerseits an ein lineares Matrixfilter FS angeschaltet sind. Entsprechend ist empfangsseitig ein lineares Matrix-Filter GE als Detektor angeordnet, mit dessen Hilfe empfangsseitige Subkanäle SU21 bis SU2MT voneinander entkoppelt werden. Ausgangssignale bzw. Symbole des Matrixfilters GE sind als Datenfolgen D21 bis D2MT in einem Vektor s zusammengefasst.

Die Anzahl MT der sendeseitigen und der empfangsseitigen Subkanäle ist adaptiv an die Übertragungskanaleigenschaften anpassbar und sowohl sendeseitig als auch empfangsseitig gleich groß.

Der "Mean-Squared-Error, MSE" zwischen einem Sendesignal und einem geschätzten Empfangssignal errechnet sich zu:

$$MSE = E\left[||s-s'||^2\right]$$

Für die sendeseitige Filtermatrix FS und für die empfangsseitige Filtermatrix GE gilt für eine Erzielung eines minimalem Minimum-Mean-Squared-Errors MMSE mit I als Einheitsmatrix:

$$GE = \Psi(I + \Phi_f^H V^H H^H R_{nn}^{-1} HV\Phi_f)^{-1}\Phi_f^H V^H H^H R_{nn}^{-1}$$

$$= \Psi\Phi_g V^H H^H R_{nn}^{-1}$$

$$\Phi_g = (I + \Phi_f^H V^H H^H R_{nn}^{-1} HV\Phi_f)^{-1}\Phi_f^H$$

$$FS = V\cdot\Phi_f\cdot\Psi^H$$

Die Diagonalmatrix $\Phi_f$ repräsentiert eine Leistungszuordnungs-Matrix für die Subkanäle und ist definiert durch:

$$\Phi_f^2 = (\mu^{-1/2}\Lambda^{-1/2}-\Lambda^{-1})$$

Die Konstante $\mu$ wird solange iterativ bestimmt, bis die Sendeleistungen auf den Subkanälen in $\Phi_f$ unter Einhaltung einer vorgegebenen Gesamtleistungsobergrenze positiv sind.

Damit die voneinander unabhängigen Subkanäle einen gleichen Übertragungsfehler BER (Bit-Error-Rate) aufweisen, wird die orthogonale $\Psi$-Matrix so gewählt, dass bei allen Subkanälen die Leistung gleichmäßig über alle Eigenmoden (definiert durch V mit zugehörigem $\Lambda$) verteilt wird. Dies wird mit Hilfe einer diskreten Fourier-Transformation (DFT) oder mit Hilfe einer Hadamard-Matrix mit jeweils zugeordneter Leistungsskalierung erreicht, wobei eine vorgegebene sendeseitige Gesamtleistung nicht verändert wird.

Durch die Verwendung von Kurzzeitinformationen ST-CSI kann der oben beschriebene Übertragungskanal ideal diagonalisiert werden, womit der Mean-Squared-Error zwischen sendeseitigen und empfangsseitigen Symbol-Vektoren minimiert wird.

Werden hingegen Langzeitinformationen LT-CSI verwendet, ist anstelle eines Kurzzeit-Mean-Squared-Error eine obere Schranke des Langzeiterwartungswerts eines Mean-Squared-Errors minimierbar.

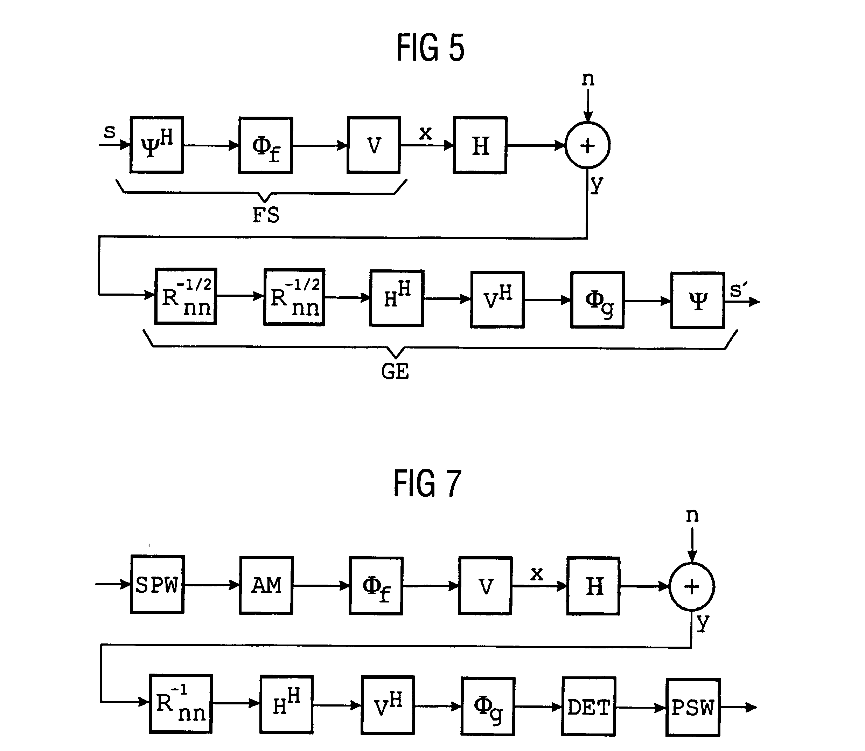

FIG 5 zeigt ein Bockschaltbild eines in FIG 4 dargestellten sendeseitigen Matrix-Filters FS und eines empfangsseitigen Matrix-Filters GE.

Die Übertragungskanaleigenschaften werden wie bisher durch die Matrix H beschrieben.

Bei einer sogenannten "Successive-Interference-Cancellation" (SIC) wird abweichend zu FIG 3 das lineare sendeseitige Matrix-Filter FS derart gewählt, dass diejenigen Symbole, die empfangsseitig zuerst detektiert werden sollen, ein hohes Signal-zu-Rausch-Verhältnis SNR (Signal-To-Noise-Ratio) aufweisen.

Dadurch wird einerseits erreicht, dass die einzelnen Symbole empfangsseitig mit einer hohen Wahrscheinlichkeit fehlerfrei detektiert werden. Besonders vorteilhaft müssen bei einer schrittweise durchgeführten Detektion im weiteren Verlauf weniger Inter-Subkanal-Interferenzen eliminiert werden, da diese bereits in vorhergehenden Detektionsschritten entfernt wurden.

FIG 6 zeigt ein Blockschaltbild einer erfindungsgemäßen Anordnung zur Datenübertragung mit einer sendeseitigen Optimierung für einen "Maximum-Likelihood"-Empfänger.

Ein minimaler Abstand nach Übertragungskanal und einem "Noise-Whitening-Filter" zwischen zwei frei wählbaren sendeseitigen Vektorhypothesen $s_k$ und $s_j$ ist formulierbar als:

$$d_{\min} \propto \min_{sj,sk} \left[(s_j - s_k)^H F^H H^H R_{nn}^{-1} HF (s_j - s_k)\right]$$

Maximiert man diesen minimalen Abstand mit Hilfe eines sendeseitig angeordneten Matrix-Filters F, so wird die Bitfehlerrate BER minimiert:

$$F_{opt} = \arg\max_F \min_{sj,sk} \left[(s_j - s_k)^H F^H H^H R_{nn}^{-1} HF(s_j - s_k)\right]$$

Stehen sendeseitig nur Langzeitinformationen LT-CSI der Übertragungskanäle zur Verfügung, so ist eine langzeitbasierte Optimierung durchführbar:

$$F_{opt} = \arg\max_{F} \min_{sj,sk} \left| \left(s_j - s_k\right)^H F^H E\left[H^H R_{nn}^{-1} H\right] F\left(s_j - s_k\right) \right|$$

Das resultierende Matrix-Filter hängt von den sendeseitigen Symbol-Konstellationen sowie von den jeweiligen Übertragungskanaleigenschaften (Korrelationen) ab. Empfangsseitig ist ein Maximum-Likelihood-Detektor ML angeordnet.

FIG 7 zeigt ein Blockschaltbild für eine erfindungsgemäße Anordnung zur Datenübertragung mit diagonalisierten Übertragungskanälen und adaptiver Modulation auf den Subkanälen.

Stehen sendeseitig Kurzzeitinformationen ST-CSI zur Verfügung, ist der Übertragungskanal in unabhängige parallele Subkanäle diagonalisierbar. In Kombination mit einer sendeseitigen adaptiven Modulation AM sind unterschiedliche Übertragungseigenschaften optimierbar, wie beispielsweise die Bitfehlerrate BER oder ein Gesamt-Datendurchsatz.

Empfangsseitig sind bei vollständiger Diagonalisierung beispielsweise "Maximum-Likelihood-Entscheidungen mit Hilfe von einfachen Schwellwert-Detektoren realisierbar.

Nach einer Seriell-Parallel-Wandlung SPW werden die aufgeteilten Datenströme adaptiv moduliert - AM. Mit Hilfe der Diagonalmatrix $\Phi_f$ wird die Leistungszuordnung realisiert. Mit Hilfe der V-Matrix werden die einzelnen Subkanäle der adaptiven Antennenanordnung zugeordnet. Die V-Matrix beinhaltet die Eigenvektoren einer Eigenwertzerlegung, abhängig nach Langzeitinformationen LT-CSI bzw. Kurzzeitinformationen ST-CSI.

Wie bereits in FIG 3 beschrieben gilt:

$$H^H R_{nn}^{-1} H = V \Lambda V^H$$

wobei mit Langzeitinformationen LT-CSI die V-Matrix derart beschaffen ist, dass der Übertragungskanal im Langzeitmittel diagonalisiert wird.

Empfangsseitig wird ein typisches "Noise-Whitening-Filter" verwendet, das an die Rauschkovarianzmatrix Rnn angepasst ist, die in einem zellularen Funkkommunikationssystem Gauß'sches Rauschen und Interferenzen beschreibt.

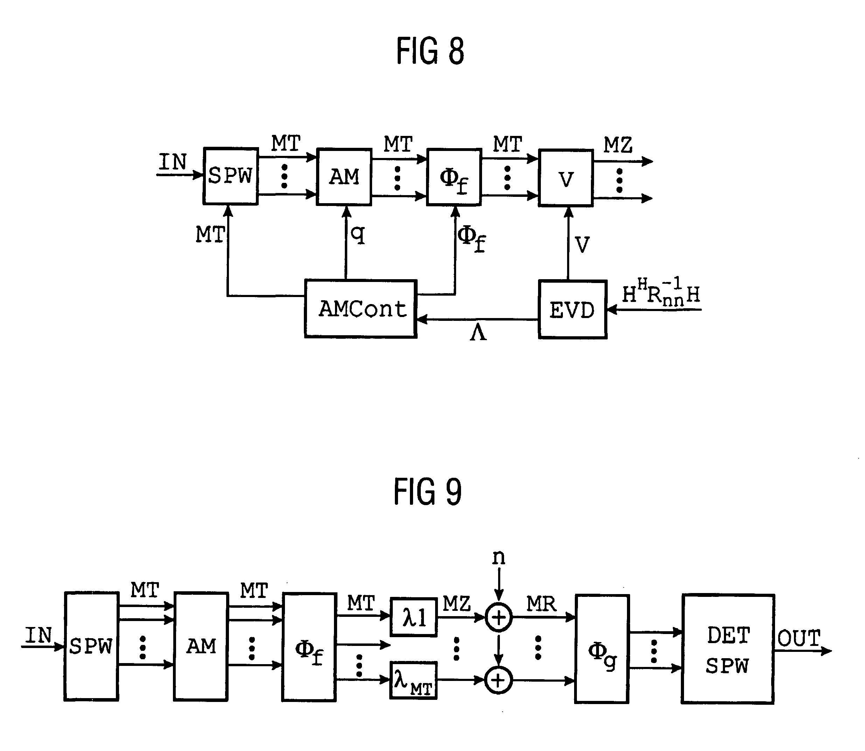

FIG 8 zeigt ein sendeseitiges Blockschaltbild zu FIG 7.
Dabei steht "EVD" für eine Einrichtung zur Eigenwertzerlegung; AM für eine adaptive Modulationseinrichtung; AMCont für eine Modulations-Kontrolleinrichtung; q für einen Vektor, der Informationen über die zu benutzenden Modulationsverfahren enthält, und letztendlich MT für die Anzahl der adaptiv anpassbaren Subkanäle.

FIG 9 zeigt eine erfindungsgemäße Anordnung zur Datenübertragung mit diagonalisierten Übertragungskanälen, adaptiver Modulation und adaptiver Leistungszuordnung.

Dabei werden Sende- und Empfangsseite mit Hilfe von Kurzzeitinformationen ST-CSI diagonalisiert, wobei Modulation und Leistungszuordnung adaptiv anpassbar sind.
Zu beachten ist, dass die Matrix Φg diagonal ist und lediglich jeden einzelnen Gewinn des Subkanals skaliert.

Für den Fall, dass lediglich Langzeitinformationen LT-CSI sendeseitig zur Verfügung stehen, wird die Matrix Φg nicht diagonalisiert, sondern übereinstimmend mit dem empfangsseitigen Empfänger dimensioniert. Dabei sind herkömmliche Empfänger (ML-, MMSE- oder SIC-Empfänger) zur Trennung der Subkanäle verwendbar.

Prinzipiell wird jedoch die gleiche Leistungszuordnung und Modulation verwendet wie bei einer Verwendung von Kurzzeitinformationen ST-CSI.

**Patentansprüche**

1. Anordnung zur Datenübertragung in einem Funkkommunikationssystem, bei der sendeseitig ein Seriell/Parallel-Wandler (SPW) zur Umwandlung eines Symbole aufweisenden Eingangssignals (IN) mit serieller Bitfolge in insgesamt MT parallele Datenfolgen (D11, ..., D1MT) für MT zugeordnete Subkanäle (SU11, ..., SU1MT) angeordnet ist und jeder Subkanal zur Modulation der Datenfolge jeweils einen Modulator (QMOD1, ..., QMODMT) aufweist, dessen dem jeweiligen Subkanal (SU11, ..., SU1MT) zugeordnetes Modulationsverfahren in Abhängigkeit von aus Eigenschaften eines Funkübertragungskanals gewonnenen Übertragungskanalinformationen (CSI) durchgeführt wird,
**dadurch gekennzeichnet,**

- **dass** den Modulatoren der Subkanäle, deren Anzahl in Abhängigkeit von den Übertragungskanalinformationen (CSI) festgelegt ist, ein gemeinsames, aus drei aufeinanderfolgende Funktionsblöcken (ΨH, Φf, Ξf) gebildetes Matrix-Filter (MF) nachgeschaltet ist, das aus den eingangsseitig angeschalteten modulierten MT Datenfolgen (DF11, ..., DF1MT) insgesamt MZ Datenfolgen (DZ11, ..., DZ1MZ) zur Abstrahlung über MZ Antennensysteme einer Antennenanordnung in der Weise bildet,
- **dass** der erste Funktionsblock (ΨH) einzelne Symbole des Eingangssignals (IN) anhand der Übertragungskanalinformationen (CSI) den einzelnen Funkübertragungskanälen zuordnet, dass der zweite Funktionsblock (Φf) jedem einzelnen Funkübertragungskanal jeweils eine spezifische Leistung zuordnet und dass der dritte Funktionsblock (Ξf) die Symbole den MZ Antennensystemen (A11, ..., A1MZ) zuordnet.

2. Anordnung nach Anspruch 1, **dadurch gekennzeichnet,**

- **dass** empfangsseitig eine MR Antennensystemen (A21, ..., A2MR) aufweisende Antennenanordnung (ANT2Z) angeordnet ist, von denen jedes Antennensystem die über die Funkübertragungskanäle gesendeten Datenfolgen (DZ11, ..., DZ1MZ) empfängt,
- **dass** die empfangsseitigen Antennensysteme (A21, ..., A2MR), ausgangsseitig mit einem Detektor (DETZ) verbunden sind, der aus den empfangenen MR Datenfolgen (DZ21, ..., DZ2MR) insgesamt MT parallele Datenfolgen (D21, ..., D2MT) für MT empfangsseitige Subkanäle (SU21, ..., SU2MT) bildet, und
- **dass** der Detektor (DETZ) ausgangsseitig mit einem Parallel/Seriell-Wandler (PSW) verbunden ist, der aus den MT Datenfolgen (D21, ..., D2MT) der Subkanäle (SU21, ..., SU2MT) ein Ausgangssignals (OUT) mit serieller Bitfolge bildet.

3. Anordnung nach Anspruch 1 oder 2, **dadurch gekennzeichnet, dass** die sendeseitigen Übertragungskanalinformationen (CSI) Kurzzeitinformationen (ST-CSI) und/oder Langzeitinformationen (LT-CSI) eines Funkübertragungskanals beinhalten.

4. Anordnung nach einem der vorhergehenden Ansprüche, **dadurch gekennzeichnet, dass** Sendeseite und Empfangsseite über eine Feedback-Verbindung verbunden sind, mit deren Hilfe empfangsseitig gewonnene Funkübertragungskanalinformationen (CSI) zur Sendeseite übertragen werden.

5. Anordnung nach einem der vorhergehenden Ansprüche, **dadurch gekennzeichnet, dass** bei einer optimierten Anpassung von sendeseitiger Subkanalanzahl und sendeseitigen Modulationsverfahren für einen empfangsseitig angeordneten "Minimum-Mean-Squared-Error"-Empfänger die sendeseitigen MT Modulatoren (QMOD1, ..., QMODMT) ein gleiches Modulationsverfahren aufweisen.

6. Anordnung nach einem der vorhergehenden Ansprüche, **dadurch gekennzeichnet, dass** bei einer optimierten Anpassung von sendeseitiger Subkanalanzahl und sendeseitigen Modulationsverfahren empfangsseitig ein "Maximum-Likelihood"-Empfänger bzw. ein Maximum-Likelihood-Detektor angeordnet ist.

**Revendications**

1. Dispositif de transmission de données dans un système de radiocommunication, dans lequel est placé, coté émission un convertisseur sériel-parallèle (SPW) destiné à convertir un signal d'entrée (IN) comprenant des symboles, constitué d'une suite de bits sériels, en au total MT suites de données parallèles (D11, ..., D1MT) pour MT sous-canaux (SU11, ..., SU1MT) attribués, et dans lequel chaque sous-canal comporte, pour la modulation de la suite de données, à chaque fois un modulateur (QMOD1, ..., QMODMT) dont le procédé de modulation attribué au sous-canal respectif (SU11, ..., SU1MT) est réalisé en fonction d'informations sur le canal de transmission (CSI) obtenues à partir des caractéristiques d'un canal de radiotransmission,
**caractérisé**

- **en ce qu'**il est connecté en aval des modulateurs des sous-canaux dont le nombre est fixé en fonction des informations sur le canal de transmission (CSI), un filtre matriciel (MF) commun, formé de trois blocs fonctionnels (ΨH, Φf, Ξf) successifs, qui génère à partir des MT suites de données modulées (DF11, ..., DF1MT) sélectionnées côté entrée, au total MZ suites de données (DZ11, ..., DZ1MZ) destinées à être émises par l'intermédiaire de MZ systèmes d'antenne d'un dispositif d'antenne, de telle manière,

- **en ce que** le premier bloc fonctionnel (ΨH) attribue des symboles distincts du signal d'entrée (IN) aux différents canaux de radiotransmission, à l'aide des informations sur le canal de transmission (CSI), que le deuxième bloc fonctionnel (Φf) attribue à chacun des différents canaux de radiotransmission à chaque fois une puissance spécifique et que le troisième bloc fonctionnel (Ξf) attribue les symboles aux MZ systèmes d'antenne (A11, ... A1MZ).

2. Dispositif selon la revendication 1, **caractérisé en ce que**

- côté réception, est placé un dispositif d'antenne (ANT2Z) comprenant MR systèmes d'antenne (A21, ..., A2MR) dont chaque système d'antenne reçoit les suites de données (DZ11, ..., DZ1MZ) émises par l'intermédiaire des canaux de radiotransmission,
- les systèmes d'antenne (A21, ..., A2MR) côté réception, sont reliés côté sortie, à un détecteur (DETZ) qui génère à partir des suites de données reçues (DZ21, ..., DZ2MR) au total MT suites de données parallèles (D21, ..., D2MT) pour MT sous-canaux (SU21, ..., SU2MT) coté réception, et
- le détecteur (DETZ) est relié côté sortie, à un convertisseur parallèle-sériel (PSW) qui génère à partir des MT suites de données (D21, ..., D2MT) des sous-canaux (SU21, ..., SU2MT) un signal de sortie (OUT) constitué d'une série de bits sériels.

3. Dispositif selon la revendication 1 ou 2, **caractérisé en ce que** les informations sur le canal de transmission (CSI) côté émission, comportent des informations à court terme (ST-CSI) et/ou des informations à long terme (LT-CSI) d'un canal de radiotransmission.

4. Dispositif selon l'une des revendications précédentes, **caractérisé en ce que** les côtés émission et réception sont reliés par une liaison de retour à l'aide de laquelle les informations sur le canal de radiotransmission (CSI), obtenues côté réception, sont transmises vers le côté émission.

5. Dispositif selon l'une des revendications précédentes, **caractérisé en ce qu'**en cas d'adaptation optimale du nombre de sous-canaux côté émission et des procédés de modulation côté émission pour un récepteur à "Minimum-Mean-Squared-Error" placé côté réception, les MT modulateurs (QMOD1, ..., QMODMT) placés côté émission présentent un même procédé de modulation.

6. Dispositif selon l'une des revendications précédentes, **caractérisé en ce qu'**en cas d'adaptation optimale du nombre de sous-canaux côté émission et des procédés de modulation côté émission, un récepteur à "Maximum-Likelihood" resp. un détecteur à "Maximum-Likelihood" est placé côté émission.

**Claims**

1. Apparatus for the transmission of data in a radio communication system in the case of which a serial/parallel converter (SPW) is arranged on the transmitting side for converting an input signal (IN) having a symbol with a serial bit sequence in all the data sequences (D11, ..., D1MT) parallel to MT for the subchannels (SU11, ..., SU1MT) allocated to MT and each subchannel for modulating the data sequence in each case has a modulator (QMOD1, ..., QMODMT) of which the modulation method allocated to the specific subchannel (SU11, ..., SU1MT) depending on the transmission channel information (CSI) obtained from the characteristics of a radio transmission channel is carried out,
**characterised in that**,

- downstream of the modulators of the subchannels whose number is determined depending on the transmission channel information (CSI), a common matrix filter (MF) consisting of three consecutive functional blocks (ΨH, Φf, Ξf) is connected which, from the modulated MT data sequences (DF11, ..., DF1MT) connected on the transmitting side, forms all the MZ data sequences (DZ11, ..., DZ1MZ) for emission via the MZ antenna systems of an antenna apparatus in such a way, that
- the first functional block (ΨH) allocates individual symbols of the input signal (IN) to the individual radio transmission channels based on the transmission channel information (CSI), the second functional block (Φf) in each case allocates a specific capacity to each individual radio transmission channel and the third functional block (Ξf) allocates the symbols to the MZ antenna systems (A11, ..., A1MZ).

2. Apparatus according to claim 1, **characterised in that**,

   - an antenna apparatus (ANT2Z) having MR antenna systems (A21, ..., A2MR) is arranged on the receiving side from which each antenna system receives the data sequences (DZ11, ..., DZ1MZ) transmitted via the radio transmission channels,
   - the antenna systems (A21, ..., A2MR) on the receiving side are connected to a detector (DETZ) on the output side which from the received MR data sequences (DZ21, ..., DZ2MR) forms all the data sequences (D21, ..., D2MT) parallel to MT for the MT subchannels (SU21, ..., SU2MT) on the receiving side, and
   - the detector (DETZ) on the output side is connected to a parallel/serial converter (PSW) which from the MT data sequences (D21, ..., D2MT) of the subchannels (SU21, ..., SU2MT) forms an output signal (OUT) with a serial bit sequence.

3. Apparatus according to claim 1 or 2, **characterised in that** the transmission channel information (CSI) on the transmitting side comprises short-term information (ST-CSI) and/or long-term information (LT-CSI) of a radio transmission channel.

4. Apparatus according to one of the preceding claims, **characterised in that** both the transmitting side and the receiving side are connected via a feedback connection by means of which the radio transmission channel information (CSI) obtained on the receiving side is transmitted to the transmitting side.

5. Apparatus according to one of the preceding claims, **characterised in that** in the case of an optimised adaptation of a number of subchannels on the transmitting side and modulation methods on the transmitting side, the MT modulators (QMOD1, ..., QMODMT) on the transmitting side use the same modulation method for a "Minimum Mean Squared Error" receiver arranged on the receiving side.

6. Apparatus according to one of the preceding claims, **characterised in that** in the case of an optimised adaptation of a number of subchannels on the transmitting side and modulation methods on the transmitting side, a "Maximum Likelihood" receiver or a "Maximum Likelihood" detector is arranged on the receiving side.

FIG 1

IN → SPW

D11 / SU11 → QMOD → DM11 → ANT1 A11

D12 / SU12 → QMOD → DM12 → A12

D1MT / SU1MT → QMOD → DM1MT → A1MT

n

ANT2 A21 → DM21

A22 → DM22

A23 → DM23

A2MR → DM2MR

DET → D21 / SU21, D22 / SU22, D2MT / SU2MT → PSW → OUT

$\underline{s}$   $\underline{H}$   $y = Hs + n$

# FIG 2

EP 1 376 920 B1

# FIG 3

# FIG 6

EP 1 376 920 B1

FIG 4

EP 1 376 920 B1

# FIG 5

$$s \rightarrow \boxed{\Psi^H} \rightarrow \boxed{\Phi_f} \rightarrow \boxed{V} \xrightarrow{x} \boxed{H} \rightarrow \oplus \xleftarrow{n} \downarrow y$$

FS

$$\boxed{R_{nn}^{-1/2}} \rightarrow \boxed{R_{nn}^{-1/2}} \rightarrow \boxed{H^H} \rightarrow \boxed{V^H} \rightarrow \boxed{\Phi_g} \rightarrow \boxed{\Psi} \xrightarrow{s'}$$

GE

# FIG 7

$$\rightarrow \boxed{SPW} \rightarrow \boxed{AM} \rightarrow \boxed{\Phi_f} \rightarrow \boxed{V} \xrightarrow{x} \boxed{H} \rightarrow \oplus \xleftarrow{n} \downarrow y$$

$$\boxed{R_{nn}^{-1}} \rightarrow \boxed{H^H} \rightarrow \boxed{V^H} \rightarrow \boxed{\Phi_g} \rightarrow \boxed{DET} \rightarrow \boxed{PSW} \rightarrow$$

# FIG 8

IN → SPW

SPW → MT ⋮ → AM

AM → MT ⋮ → $\Phi_f$

$\Phi_f$ → MT ⋮ → V

V → MZ ⋮ →

MT (SPW feedback)

q (to AM)

$\Phi_f$ (to $\Phi_f$)

V (to V)

AMCont

EVD ← $H^H R_{nn}^{-1} H$

EVD → $\Lambda$ → AMCont

EP 1 376 920 B1

# FIG 9

IN → SPW

SPW → MT ⋮ → AM

AM → MT ⋮ → $\Phi_f$

$\Phi_f$ → MT → $\lambda 1$ → MZ ⋮

$\Phi_f$ → ⋮ → $\lambda_{MT}$

n

$\lambda 1$ → ⊕ → MR ⋮ → $\Phi_g$

$\lambda_{MT}$ → ⊕

$\Phi_g$ → ⋮ → DET SPW → OUT